(19) Europäisches Patentamt / European Patent Office / Office européen des brevets

(11) **EP 3 614 811 B1**

(12) **EUROPEAN PATENT SPECIFICATION**

(45) Date of publication and mention
of the grant of the patent:
**17.04.2024   Bulletin 2024/16**

(21) Application number: **18190379.0**

(22) Date of filing: **23.08.2018**

(51) International Patent Classification (IPC):
*H05B 45/10* (2020.01)    *H02M 3/335* (2006.01)
*H02M 3/338* (2006.01)    *H05B 45/37* (2020.01)

(52) Cooperative Patent Classification (CPC):
**H05B 45/10; H05B 45/37;** H02M 1/0009;
H02M 3/33515; H02M 3/338; Y02B 20/30;
Y02B 70/10

(54) **LED CURRENT SOURCE WITH PWM OPERATION AND SYNCHRONIZED ADC SAMPLING**

LED-STROMQUELLE MIT PWM-BETRIEB UND SYNCHRONISIERTER ADC-ABTASTUNG

SOURCE DE COURANT DE DEL À FONCTIONNEMENT PWM ET ÉCHANTILLONNAGE ADC SYNCHRONISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.02.2020   Bulletin 2020/09**

(73) Proprietor: **Tridonic GmbH & Co. KG
6851 Dornbirn (AT)**

(72) Inventor: **Mitterbacher, Andre
6850 Dornbirn (AT)**

(74) Representative: **Beder, Jens
Mitscherlich PartmbB
Patent- und Rechtsanwälte
Karlstraße 7
80333 München (DE)**

(56) References cited:
**US-A1- 2009 206 902    US-A1- 2012 217 889
US-A1- 2015 137 785    US-A1- 2016 057 823**

**Description**

The invention is in the field of luminaries and ballast devices providing a load current to lighting modules, for example lighting modules with plural light emitting diodes (LED). The invention concerns in particular a ballast device with a switched converter or self-resonant current source generating the load current including pulse width modulation (PWM). A specific feedback loop structure for the PWM operated ballast device is proposed.

Lighting modules comprising a plurality of LEDs in at least one of series and parallel arrangement become increasingly common in the field of luminaires.

The LED (modules) emits light with a light intensity value depending on an average LED current $I_{avg}$ flowing through the LED. In order to dim the light emitted by the LED, the average LED current $I_{avg}$ is adjusted.

A ballast device for driving the lighting module with an LED current (load current) includes an LED driver consisting of power electronic circuitry providing a current and pulse width modulation circuitry (PWM circuitry) for performing pulse width modulation of the current provided by the power electronic circuitry to an output storage capacitor. A DC voltage over the output capacitor drives the lighting module as a load of the ballast device. The PWM-circuitry is controlled such that the average LED current $I_{avg}$ provided to the lighting module corresponds to a predetermined nominal average LED current $I_{avg\_nom}$.

Control of the PWM-circuitry is performed using feedback loop control, which uses a sensed value representing the LED current, for example acquired using a shunt resistor and subsequently converted from an analogue value into a digital value by an analogue-to-digital converter (A/D converter). A duty cycle of the PWM modulated current provided to the output capacitor is controlled based on a difference between the digital value derived from the sensed value representing the actual average current $I_{avg}$ and the predetermined nominal average LED current $I_{avg\_nom}$

In particular in self-resonance power electronic circuitry the LED current is set by switching the self-resonance, high frequency operation on and off with a lower frequency. This switching of the high frequency operation leads to a significant ripple in the output LED current. In order to avoid aliasing errors, which may occur in an A/D- conversion in the feedback loop for controlling the PWM circuitry, a low pass filter is usually arranged in the feedback loop.

A shunt voltage over the shunt resistor arranged in series to the lighting module is provided to an input of the low pass filter. The low pass filter provides a mean shunt voltage as an output. The mean shunt voltage essentially is a DC signal, which is converted into a digital value by the subsequent A/D-converter without incurring any aliasing errors. Nevertheless, the low pass filter requires a low cutoff frequency (corner frequency, filter corner frequency) in order to generate a DC signal at its output.

A low pass filter with a suitably low corner frequency requires components for implementation and therefore increases costs of the ballast device.

Arranging a low pass filter with a low cutoff frequency in the feedback control loop adversely affects dynamic characteristics of the control loop for controlling the PWM duty cycle.

US 2016/ 057823 A1 discloses an apparatus that includes a current modulation circuit configured to modulate a current in at least one light-emitting device responsive to a pulse width modulated control signal. The apparatus further includes a control circuit configured to control a pulse width of the pulse width modulated control signal responsive to a first control input and to control a frequency of the pulse width modulated control signal responsive to a second control input. The first control input may include, for example, a current control input, and the second control input may include a light intensity control input, such as a dimming input. The control circuit may increase the frequency responsive to a change in the light intensity control input corresponding to a decrease in light intensity, and decrease the frequency responsive to a change in the light intensity control input corresponding to an increase in light intensity.

US 2015/137785 A1 shows a digital compensator that combines a version of the input voltage with a version of the output current or voltage in such a way as to eliminate dependence on variations in the input voltage.

US 2009/206902 A1 discloses a method for providing power factor correction for a boost converter. The method includes providing a current sense signal indicative of a current flowing through an inductor of the boost converter, and sampling the current sense signal to provide a digital current sense signal. The method proceeds by generating a pulse width modulated output signal to control an on-time of a PFC switch of the boost converter based on the digital current sense signal and generates a first synchronous signal based on a carrier frequency of a triangular carrier wave used to generate the pulse width modulated output signal. The first synchronous signal triggers generation of the pulse width modulated output signal. The method further generates a second synchronous signal based on the first synchronous signal, wherein the second synchronous signal indicates a sampling rate to be used in sampling the current sense signal to provide the digital current sense signal, such that sampling takes place substantially in a middle of a cycle of the pulse width modulated output signal.

Therefore, the ballast device providing a pulse width modulated current to a lighting module is to be improved with respect to complexity and dynamic characteristics of the feedback control loop.

The ballast device according to independent claim 1 and the corresponding method for controlling a ballast device solve the technical problem.

The dependent claims define further advantageous embodiments.

A ballast device for providing a load current to a lighting module according to a first aspect solves the technical problem. The lighting module is preferably an LED module. The ballast device comprises a current source circuit configured to generate a current. A pulse width modulation circuit of the ballast device is configured to provide a pulse width modulated load current based on the current via an output capacitor to the lighting module. The ballast device further comprises a control circuit for controlling the pulse width modulation circuit based on a feedback signal representing the load current. According to the invention, the current source circuit is a self-resonance power electronic circuit configured to operate at a high switching frequency. The pulse width modulation circuit is configured to superimpose the generated current with a pulse width modulation signal with a pulse frequency smaller than the high switching frequency. A feedback loop circuit is configured to sample a measurement signal in synchronization with a pulse width modulation period of the pulse-width modulation signal for generating the feedback signal.

The control circuit synchronizes on the one hand the pulse width modulation of the load current and on the other hand the sampling of the measurement signal representative of the load current.

This enables to avoid disadvantageous effects of the low pass filter, or even omit the low pass filter from the feedback loop. The dynamic characteristics of the control of the load current by the feedback loop are improved.

The low pass filter is not necessary or at least its complexity is reduced due to a higher filter cut-off frequency, resulting in decreased cost of the ballast device.

The feedback loop circuit of the ballast device according to a preferred embodiment is configured to sample the measurement signal at at least one predetermined time in the pulse width modulation period.

Sampling the measurement signal, which can be a measurement voltage or a measurement current representative of the load current, at fixed predetermined times provides a representative digital value for the actual average load current for each pulse width modulation period and thus offers an advantageous fast reaction time of the feedback loop control for the average load current.

According to an advantageous embodiment, the ballast device comprises the control circuit configured to generate a sample control signal synchronized with a pulse width modulation control signal.

The control circuit controlling the operation of the pulse width modulation circuit can at only small additional effort generate and provide the sample control signal derived from the pulse width modulation control signal. Thus, a single electronic circuit, for example a microprocessor, already present in the ballast device controls the time synchronisation of sampling the measurement signal in the feedback loop circuit and of the pulse width modulation of the load current with each other.

In a preferred embodiment, the sample control signal of the ballast device includes a sampling pulse at at least one of a start time or an end time of a pulse width modulation pulse of the pulse width modulation control signal.

Therefore, the control circuit can easily derive the sampling control signal for the A/D-converter from the pulse width modulation control signal.

The current source circuit of an advantageous embodiment of the ballast device operates at the high switching frequency. The pulse width modulation frequency may for example be in the region of 20 kHz and therefore significantly smaller, for example by an order of magnitude than the high switching frequency. The high switching frequency of the ballast device may in particular be larger than 1 MHz.

The ballast device according to a preferred embodiment has the feedback loop circuit configured to dispense with a low pass filter for filtering the measurement signal.

Alternatively, the feedback loop circuit includes a low pass filter with a high cutoff frequency and configured to filter the measurement signal.

Therefore the manufacturing cost of the ballast device are reduced when compared with prior art, although the dynamic characteristics of the feedback control of the load current are improved.

The pulse width modulation control circuit of another embodiment is configured to compare the sampled measurement signal with a signal representing a nominal load current value, in particular an externally selectable nominal load current value.

The improved dynamic characteristics of the feedback loop control are particularly advantageous when the nominal load current value is selectable and may be changed regularly, for example because of dimming the lighting module.

The ballast device according to an advantageous embodiment comprises a current measurement means, in particular a shunt resistor or a measurement transformer arranged in series to the lighting module. The current measurement means is configured to generate the measurement signal representing the load current.

Therefore the ballast device can omit any circuit elements and procedures for concluding the actual value of the load current on a primary side of a isolation barrier of a converter circuit, for example by evaluating a current of a power factor correction circuit arranged on the primary side of the isolation barrier (SELV barrier) of the ballast device.

Therefore, a direct and precise measurement representative of the load current is readily available for the feedback loop control of the load current.

According to a second aspect, a method for controlling a ballast device providing a load current to a lighting module, in particular to a LED module solves the technical problem in a corresponding manner to the ballast device according to the first aspect.

The method comprises a step of generating, by a current source circuit, a current and a step of a pulse width modulation circuit providing a pulse width modulated load current based on the current via an output capacitor to the lighting module. In a step of controlling a control circuit controls the pulse width modulation circuit based on a feedback signal representative for the load current. According to the invention, the current source circuit is a self-resonance power electronic circuit operating at a high switching frequency. The pulse width modulation circuit superimposes the generated current with a pulse width modulation signal with a pulse frequency smaller than the high switching frequency. The method is further characterised in further comprising a step of sampling a measurement signal representative of the load current in synchronisation with a pulse width modulation period of the pulse width modulation signal for generating the feedback signal.

Advantageously, the step of sampling includes sampling the measurement signal at at least one predetermined time in the pulse width modulation period.

According to an embodiment, the method for controlling a ballast device comprises a step of generating a sample control signal synchronized with a pulse width modulation control signal.

Preferably, the sample control signal includes a sampling pulse at at least one of a start time or an end time of a pulse width modulation pulse of the pulse width modulation control signal.

In an advantageous embodiment, the method dispenses with filtering the measurement voltage in a low pass filter of the control loop circuit. Alternatively, the method comprises a step of filtering the measurement voltage in a low pass filter of the control loop circuit wherein the low pass filter has a high cutoff frequency.

The method for controlling a ballast device according to an advantageous embodiment comprises a step of comparing, by the control circuit, the sampled measurement signal with a signal representing a nominal load current value, in particular a externally selectable nominal load current value.

According to a preferred embodiment of the method for controlling a ballast device generates the feedback signal representing the load current by a current measurement means, in particular a shunt resistor or a measurement transformer, arranged in series to the lighting module.

A discussion of advantageous embodiment follows with reference to the enclosed figures, in which

Fig. 1     provides an overview of main circuit blocks of the ballast device according to the invention,

Fig. 2     a timing chart displaying control and output signals of the ballast device of Fig. 1, and

Fig. 3     shows a simplified flow chart with method steps for executing the method for controlling the ballast device.

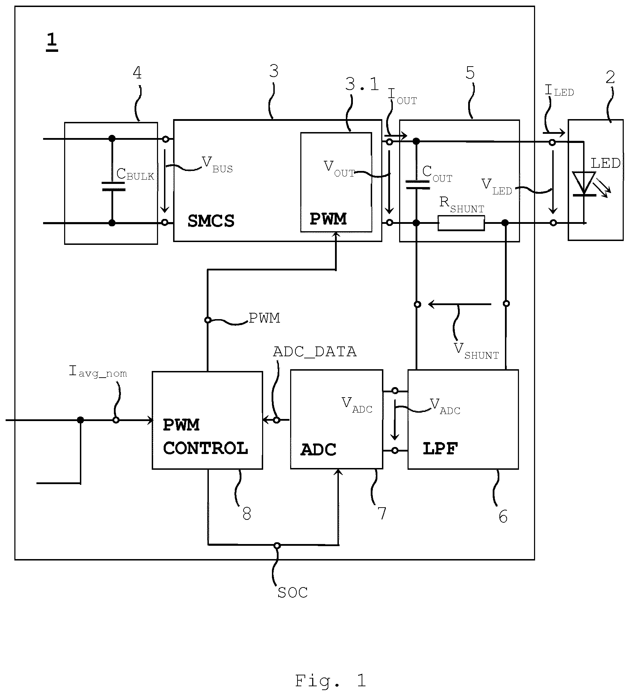

Fig. 1 depicts a ballast device 1, which drives a load with a load current. Fig. 1 depicts the load as a lighting module represented by a LED module 2.

The ballast device 1 outputs a load current (LED current) $I_{LED}$ to the LED module 2.

The ballast device 1 comprises a current source circuit 3, which generates a current. The current source circuit 3 may be of a switched mode power supply (SMPS) topology, for example a switched converter circuit or a self-resonant converter.

The ballast device 1 further comprises a pulse width modulation circuit 3.1, which performs pulse width modulation (PWM) of the current provided by the current source circuit 3. The duty cycle of the pulse width modulated output current provided by the pulse width modulation circuit 3.1 is controlled by a pulse width modulation control signal PWM.

The duty cycle of the pulse width modulation is defined as the fraction Torr of the pulse width modulation period $T_{PWM}$, in which the pulse width modulated signal is active ("high").

Controlling an average load current, and therefore the intensity of light emission of a lighting module, by controlling the duty cycle of the pulse width modulated load current is generally known.

The load current $I_{LED}$ is pulse width modulated. The load current $I_{LED}$ has an average current value $I_{avg}$. The actual average load current $I_{LED}$ has a value which can be controlled by determining a suitable duty cycle of the pulse width modulation.

The load current $I_{LED}$ in Fig. 1 is controlled to correspond to a nominal average current $I_{avg\_nom}$.

In particular, a nominal average current $I_{avg\_nom}$ is provided to the control circuit 8 of the ballast device 1. The nominal average current $I_{avg\_nom}$ can have a selectable nominal average current value or a fixed, predetermined nominal average current value.

The nominal average current $I_{avg\_nom}$ can be set by the control circuit 8 or by a further, different control circuit of the ballast device 1.

The control circuit 8 or the further control circuit can be implemented using one or more microprocessors or applicant specific integrated circuits (ASICs).

Additionally or alternatively, the nominal average current $I_{avg\_nom}$ can be input or amended externally using an interface of the ballast device 1 not explicitly shown in Fig. 1.

The ballast device 1 comprises electronic power circuitry 4 which generates a DC bus voltage $V_{BUS}$ from an AC supply voltage, for example an AC supply voltage $V_{AC}$ provided by mains supply.

The electronic power circuitry 4 may perform further functions, for example rectifying the AC supply voltage $V_{AC}$, and performing power factor correction (PFC).

A current source circuit 3 generates a pulse width modulated current $I_{OUT}$ from the bus voltage $U_{BUS}$ provided by the electronic power circuitry 4. The pulse width modulation circuit 3.1 generates the pulse width modulated current $I_{OUT}$ from a current based on a pulse width modulation control signal PWM.

The current source circuit 3 provides the modulated current $I_{OUT}$ to an output circuit 5. The output circuit 5 comprises an output capacitor $C_{OUT}$. A voltage $V_{OUT}$ over the output capacitor $C_{OUT}$ drives the load current $I_{LED}$ provided via output terminals to the LED module 2.

The output circuit 5 further comprises a shunt resistor $R_{SHUNT}$ connected in series to the output terminals and therefore to the LED module 2.

A voltage drop $V_{SHUNT}$ over the shunt resistor $R_{SHUNT}$ is representative for the load current $I_{LED}$ through the LED module 2. The voltage drop $V_{SHUNT}$ over the shunt resistor $R_{SHUNT}$ is representative for the load current $I_{LED}$ and constitutes a measurement signal representative for the load current $I_{LED}$.

The output circuit may comprise another implementation of a measuring means for determining a sensed value corresponding to the actual load current $I_{LED}$ than the shunt resistor $R_{SHUNT}$.

For example, a current transformer can be used instead of the shunt resistor $R_{SHUNT}$ to provide a sensed current in its secondary winding proportional to the load current $I_{LED}$ in its primary winding connected in series with the LED module 2.

The sensed voltage $V_{SHUNT}$ which is the voltage drop over the shunt resistor $R_{SHUNT}$ is provided to a feedback loop of the pulse width modulation control. The feedback loop in Fig. 1 comprises a low pass filter 6, which obtains the sensed voltage $V_{SHUNT}$ at its filter input.

The low pass filter 6 performs low pass filtering of the sensed voltage $V_{SHUNT}$ with a cutoff frequency $f_{CUTOFF}$.

The low pass filter 6 provides a filtered sensed voltage $V_{ADC}$ to a subsequent A/D-converter circuit 7.

The low pass filter 6 is characterized in that its filter cut-off frequency $f_{CUTOFF}$ is significantly higher than necessary to suppress a ripple frequency superimposed with the load current $I_{LED}$. Thus, the low pass filter 6 has a larger filter bandwidth corresponding to a larger passband and its implementation is significantly more cost effective than in prior art implementations of a low pass filter for a corresponding purpose of suppressing a ripple frequency superimposed with the load current $I_{LED}$.

Additionally the increased cut-off frequency of the low pass filter 6 provides for a faster time response of the low pass filter 6 and reduced time delay for a signal passing the low pass filter 6.

The reduced time delay of the low pass filter 6 results in an increased closed feedback loop control speed, therefore in improved dynamic characteristics of the closed feedback loop control of the load current $I_{LED}$. This is of particular advantage for varying values of the nominal average current $I_{avg\_nom}$ in a time sequential manner, for example during a dimming operation of the LED module 2.

An advantageous embodiment may omit the low pass filter 6 entirely.

The A/D-converter circuit 7 performs sampling the, possibly filtered, voltage $V_{ADC}$, holding the sampled voltage $V_{ADC}$ for subsequently generating a digital value for the sampled voltage $V_{ADC}$ and outputting the digital value for the sampled voltage $V_{ADC}$ in a digital signal ADC_DATA to the control circuit 8.

The A/D-converter circuit 7 performs sampling of the voltage $V_{ADC}$ based on a sampling control signal SOC provided by the control circuit 8. The A/D-converter circuit 7 particularly samples the voltage $V_{ADC}$ at one or plural predetermined points of times defined in (by) the sampling control signal SOC.

The predetermined points in time for sampling the voltage $V_{ADC}$ correspond to fixed points in time relative to the pulse width modulation period $T_{PWM}$ of the pulse width modulated output current $I_{OUT}$.

Thus, a ripple on the load current $I_{LED}$ is cancelled out by sampling the voltage $V_{ADC}$ representing the sensed load current $I_{LED}$. The low pass filter 6 specifically designed to suppress the ripple is no longer essential and may be implemented with a higher cut-off frequency. Thus, the dynamic characteristics and the stability of the closed feedback loop control system for controlling the load current $I_{LED}$ are improved.

The sampling control signal SOC ensures that the A/D-converter circuit 7 is synchronized to the low frequency operation of the pulse width modulation circuit 3.1 of the current source circuit 3.

The sampling control signal SOC may start the sampling process of the A/D-converter circuit 7 every period of the pulse width modulation or at any $N^{th}$ period of the pulse width modulation of the output current $I_{OUT}$.

Additionally or alternatively, the sampling control signal SOC can start the sampling process of the A/D-converter circuit 7 once, twice or a plurality of times within a single pulse width modulation period $T_{PWM}$ of the pulse width modulation of the output current $I_{OUT}$.

The control circuit 8 compares the received and converted digital value of the sampled voltage $V_{ADC}$ in the digital signal ADC_DATA with a comparison value corresponding to a nominal average current $I_{avg\_nom}$. The control circuit 8 determines a difference between the converted digital value of the sampled voltage $V_{ADC}$ in the digital signal ADC_DATA and the comparison value corresponding to a nominal average current $I_{avg\_nom}$.

The control circuit 8 is configured to acquire the nominal average current $I_{avg\_nom}$ via an interface of the control circuit 8.

The control circuit 8 can convert the acquired nominal average current $I_{avg\_nom}$ to the range of the comparison value.

Additionally or alternatively, the comparison value for nominal average current $I_{avg\_nom}$ can be read from a memory storing the nominal average current $I_{avg\_nom}$ associated with the corresponding comparison values.

The nominal average current $I_{avg\_nom}$ can be acquired via an interface of the ballast device 1 to external devices, for example from a dimming input device generating a dimming value.

The interface of the ballast device 1 to external devices can be an interface according to a protocol for controlling lighting in building automation, for example DALI™ or DSI.

The control circuit 8 may comprise a controller means (controller). The controller means receives information on the difference between the digital signal ADC_DATA and the comparison value corresponding to a nominal average current $I_{avg\_nom}$.

The difference between the digital signal ADC_DATA and the comparison value corresponding to a nominal average current $I_{avg\_nom}$ represents a measured error between the nominal average current $I_{avg\_nom}$ and the measured actual load current $I_{LED}$.

The controller means determines a suitable pulse width modulation duty cycle in order to adapt the actual load current $I_{LED}$ to the nominal average current $I_{avg\_nom}$. The control circuit 8 generates a pulse width modulation control signal PWM based on the determined pulse width modulation duty cycle and outputs the generated pulse width modulation control signal PWM to the pulse width modulation circuit 3.1.

The pulse width modulation circuit 3.1 controls the duty cycle of the the pulse width modulated current $I_{OUT}$ from a current based on the obtained pulse width modulation control signal PWM.

The low pass filter 6, the A/D-converter circuit 7 and the pulse width modulation control circuit 8 represent a feedback loop of a closed feedback control system for controlling the load current $I_{LED}$.

The load current $I_{LED}$ represents the process variable of the feedback loop control system.

The nominal average current $I_{avg\_nom}$ represents a reference input (set point) of the feedback loop control system.

The low pass filter 6, the A/D-converter circuit 7 and the pulse width modulation control circuit 8 may be implemented in a common integrated circuit, for example a microcontroller circuit or an ASIC.

Additionally or alternatively at least some of the structural elements (low pass filter 6, A/D-converter circuit 7 and control circuit 8) may be implemented by dedicated discrete electronic circuits.

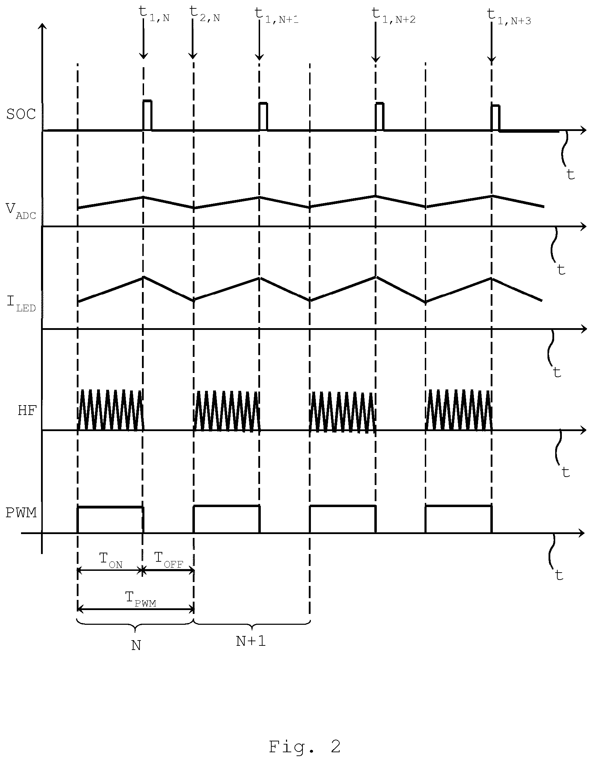

Fig. 2 shows a timing chart displaying control and output signals of the ballast device 1 of Fig. 1.

The timing chart displays the time t in a horizontal direction. In a vertical direction of the diagram in Fig. 2, the signal levels of five different characteristic signals of the ballast device 1 are depicted.

The pulse width modulation signal PWM shows a high level during a time $T_{ON}$ when the current source circuit 3 outputs the pulse width modulated output current $I_{OUT}$. During a time $T_{OFF}$ immediately succeeding to time Torr, the current source circuit 3 outputs no output current $I_{OUT}$. The time period $T_{PWM}$ of the pulse width modulated output current $I_{OUT}$ is

$$T_{PWM} = T_{ON} + T_{OFF}; \qquad (1)$$

The signal labelled HF depicted in in Fig. 2 represents the output current $I_{OUT}$ operating at a high frequency significantly higher than the pulse width modulation frequency.

During the time Torr in the pulse width modulation signal PWM, the output current $I_{OUT}$ charges the output capacitor $C_{OUT}$. This results in an increasing output voltage $U_{OUT}$ over the output capacitor $C_{OUT}$.

The increasing output voltage $V_{OUT}$ drives an increasing load current $I_{LED}$ via the output terminals through the LED module 2.

The increasing load current $I_{LED}$ results in a proportionally increasing voltage drop over the shunt resistor $R_{SHUNT}$ connected in series to the LED module 2.

The current source circuit 3 and in particular the pulse width modulation circuit 3.1 is controlled by the pulse width modulation control signal PWM to transition from the Torr time to the $T_{OFF}$ time of the pulse width modulated output current $I_{OUT}$ at a time ti. The signal HF representing the output current $I_{OUT}$ stops at the time $t_1$ and is zero for the time period $T_{OFF}$ between $t_1$ and $t_2$.

At the time $t_1$, the control circuit 8 further provides a sampling time point in sampling control signal SOC to the A/D-converter circuit 7.

Receiving the sampling time point at the time $t_1$, the A/D-converter circuit 7 samples the input voltage to the A/D-converter circuit 7 corresponding to the filtered measurement signal $V_{ADC}$ and therefore initiates the converting analogue-to-digital conversion process.

Fig. 2 discloses one single sampling time point $t_{1,N}$, $t_{1,N+1}$, $t_{1,N+2}$ and $t_{1,N+3}$ for the corresponding pulse width modulation time period $T_{PWM}$. The plurality of sampling time points $t_{1,N}$, $t_{1,N+1}$, $t_{1,N+2}$ and $t_{1,N+3}$ corresponding to respective periods each lie at a same relative time position within the corresponding pulse width modulation time period $T_{PWM}$. Thus, the sampling time points $t_{1,N}$, $t_{1,N+1}$, $t_{1,N+2}$ and $t_{1,N+3}$ are synchronized with the pulse width time period $T_{PWM}$.

During the time period $T_{OFF}$, the electric energy stored in the output capacitor $C_{OUT}$ drives the load current $I_{LED}$, however with a decreasing current value.

The decreasing load current $I_{LED}$ results in a proportionally decreasing voltage drop over the shunt resistor $R_{SHUNT}$ connected in series to the LED module 2 until the pulse width modulation begins its $(N+1)^{th}$ time period $T_{PWM}$ succeeding to the $N^{th}$ time period $T_{PWM}$.

The timing of the signals in fig. 2 has been described with respect to a first pulse width modulation period N. The second to fourth periods pulse width modulation periods (N+1), (N+2) and (N+3) depicted in Fig. 2 show corresponding signals.

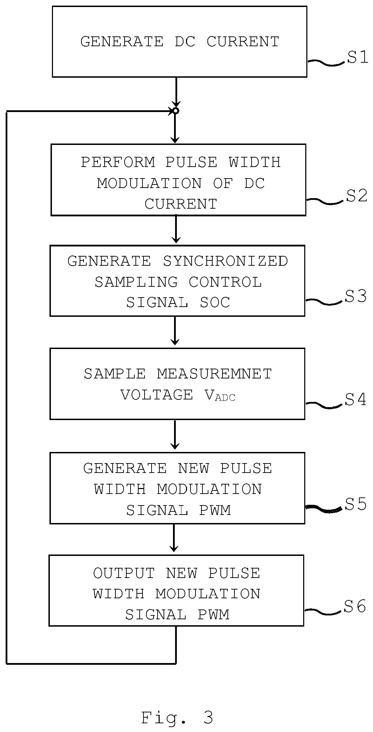

Fig. 3 shows a simplified flow chart with method steps for executing the method of controlling the ballast device 1 according to an embodiment.

The method comprises a step S1 of the current source circuit 3 generating a current.

In step S2 following to step S1, the pulse width modulation circuit 3.1 generates a pulse width modulated load current $I_{OUT}$ based on the current and the pulse width modulation control signal PWM and provides the generated pulse width modulated load current $I_{OUT}$ via an output capacitor $C_{OUT}$ to the lighting module (LED module 2).

In step S3, the control circuit 8 generates a sampling control signal SOC and provides the sampling control signal to the A/D-converter circuit 7.

When receiving the sampling control signal SOC, in the subsequent step S4, the A/D-converter circuit 7 samples the measurement signal $V_{ADC}$ in synchronization with the pulse width modulation period $T_{PWM}$ and generates the feedback signal ADC_DATA including the sampled measurement signal $V_{ADC}$ to the control circuit 8.

In step S5, the control circuit 8 generates the pulse width modulation control signal PWM based on a difference between the feedback signal ADC_DATA representing an actual value of the average load current $I_{LED}$ and a nominal comparison value for the load current $I_{avg\_nom}$.

In step S6, the control circuit 8 provides the generated pulse width modulation control signal PWM to the switched power current source 3, in particular the pulse width modulation circuit 3.1 of the current source circuit 3.

After step S6, the method proceeds with step S2 using the generated pulse width modulation control signal PWM for generating the pulse width modulated load current $I_{OUT}$ based on the current $I_{OUT}$ in the pulse width modulation circuit 3.1.

**Claims**

1. A ballast device for providing a load current to a lighting module, in particular an LED lighting module (2), the ballast device comprising

   a current source circuit (3) configured to generate a current ($I_{OUT}$),
   a pulse width modulation circuit (3.1) configured to provide a pulse width modulated load current ($I_{LED}$) based on the current ($I_{OUT}$) via an output capacitor ($C_{OUT}$) to the lighting module, and
   a control circuit (8) for controlling the pulse width modulation circuit (3.1) based on a feedback signal (ADC_DATA) representing the load current ($I_{LED}$), and

   **characterized in**

   **that** the current source circuit (3) is a self-resonance power electronic circuit configured to operate at a high switching frequency, the pulse width modulation circuit (3.1) is configured to superimpose the generated current ($I_{OUT}$) with a pulse width modulation signal with a pulse frequency smaller than the high switching frequency, and
   **that** a feedback loop circuit (6, 7, 8) is configured to sample a measurement signal ($V_{ADC}$) representing the load current ($I_{LED}$) in synchronisation with a pulse width modulation period of the pulse width modulation signal for generating the feedback signal (ADC_DATA).

**2.** The ballast device according to claim 1, **characterized in**
**that** the feedback loop circuit (6, 7, 8) is configured to sample the measurement signal ($V_{ADC}$) at at least one predetermined time in the pulse width modulation period.

**3.** The ballast device according to claim 1 or 2, **characterized in**
**that** the control circuit (8) is configured to generate a sample control signal (SOC) which is synchronized with a pulse width modulation control signal (PWM).

**4.** The ballast device according to claim 3, **characterized in**
**that** the sample control signal (SOC) includes a sampling pulse at at least one of a start time or an end time of a pulse width modulation pulse of the pulse width modulation control signal (PWM).

**5.** The ballast device according to any of claims 1 to 4, **characterized in**
**that** the current source circuit (3) is configured to operate at the high switching frequency, which is larger than 1 MHz.

**6.** The ballast device according to any of claims 1 to 5, **characterized in**

>  **that** the feedback loop circuit (7, 8) dispenses with a low pass filter for filtering the measurement signal, or
>  the feedback loop circuit (6, 7, 8) includes a low pass filter (6) for filtering the measurement signal with a high cut-off frequency.

**7.** The ballast device according to any of claims 1 to 6, **characterized in**
**that** the control circuit (8) is configured to compare the sampled measurement signal (ADC _DATA) with a signal representing a nominal load current value ($I_{avg\_nom}$), in particular an externally selectable nominal load current value ($I_{avg\_nom}$).

**8.** The ballast device according to any of claims 1 to 7, **characterized in**
**that** the ballast device comprises a current measurement means, in particular a shunt resistor ($R_{SHUNT}$) or a measurement transformer, arranged in series to the lighting module, wherein the measurement means is configured to generate the measurement signal ($V_{SHUNT}$) representing the load current ($I_{LED}$).

**9.** Method for controlling a ballast device (1) providing a load current to a lighting module, in particular to a LED module (2), the method comprising the following method steps:

>  generating, by a current source circuit (3), a current ($I_{OUT}$) (S1),
>  providing, by a pulse width modulation circuit (3.1), a pulse width modulated load current ($I_{LED}$) generated based on the current ($I_{OUT}$) via an output capacitor ($C_{OUT}$) to the lighting module (S2), and
>  controlling, by a control circuit (8), the pulse width modulation circuit (3.1) based on a feedback signal (ADC_DATA) representing the load current ($I_{LED}$), and

>  **characterized in**

>  **that** the current source circuit (3) is a self-resonance power electronic circuit operating at a high switching frequency, wherein the pulse width modulation circuit (3.1) superimposes the generated current ($I_{OUT}$) with a pulse width modulation signal with a pulse frequency smaller than the high switching frequency, and the method comprising a step of sampling a measurement signal ($V_{ADC}$) in synchronization with a pulse width modulation period of the pulse width modulation signal for generating the feedback signal (ADC_DATA) (S4).

**10.** Method for controlling a ballast device (1) according to claim 9, **characterized in**
**that** the step of sampling (S4) includes sampling the measurement signal ($V_{ADC}$) at at least one predetermined time during the pulse width modulation period.

**11.** Method for controlling a ballast device (1) according to claim 9 or 10, **characterized in** comprising
a step of generating a sample control signal (SOC) which is synchronized with a pulse width modulation control signal (PWM) (S3).

**12.** Method for controlling a ballast device according to claim 11, **characterized in**
**that** the sample control signal (SOC) includes a sampling pulse at at least one of a start time or an end time of a pulse width modulation pulse of the pulse width modulation control signal (PWM).

13. Method for controlling a ballast device according to any of claims 9 to 12, **characterized in**

   **that** the method dispenses with filtering the measurement voltage ($V_{SHUNT}$) in a low pass filter of the control loop circuit (7, 8), or
   filtering the measurement signal in a low pass filter (6) of the control loop circuit (6,7,8) with a high cutoff frequency.

14. Method for controlling a ballast device according to any of claims 9 to 13, **characterized in**
   comparing, by the control circuit (8), the sampled measurement signal ($V_{ADC}$) with a signal representing a nominal load current value ($I_{avg\_nom}$), in particular an externally selectable nominal load current value ($I_{avg\_nom}$).


**Patentansprüche**

1. Vorschaltgerät zum Bereitstellen eines Laststroms für ein Beleuchtungsmodul, insbesondere ein LED-Beleuchtungsmodul (2), die Vorschaltgerät umfassend

   eine Stromquellenschaltung (3), die zum Erzeugen eines Stroms ($I_{OUT}$) konfiguriert ist,
   eine Impulsbreitenmodulationsschaltung (3.1), die zum Bereitstellen eines impulsbreitenmodulierten Laststroms ($I_{LED}$) basierend auf dem Strom ($I_{OUT}$) über einen Ausgangskondensator ($C_{OUT}$) an das Beleuchtungsmodul konfiguriert ist, und
   eine Steuerschaltung (8) zum Steuern der Impulsbreitenmodulationsschaltung (3.1) basierend auf einem Rückführungssignal (ADC_DATA), das den Laststrom ($I_{LED}$) darstellt, und
   **dadurch gekennzeichnet, dass**
   die Stromquellenschaltung (3) eine elektronische Schaltung mit Eigenresonanz ist, die konfiguriert ist, um mit einer hohen Schaltfrequenz zu arbeiten, die Impulsbreitenmodulationsschaltung (3.1) konfiguriert ist, um den erzeugten Strom ($I_{OUT}$) mit einem Impulsbreitenmodulationssignal mit einer Impulsfrequenz zu überlagern, die kleiner als die hohe Schaltfrequenz ist, und
   **dass** eine Rückführungsschleifenschaltung (6, 7, 8) konfiguriert ist, um ein den Laststrom ($I_{LED}$) darstellendes Messsignal ($V_{ADC}$) in Synchronisation mit einer Impulsbreitenmodulationsperiode des Impulsbreitenmodulationssignals zum Erzeugen des Rückführungssignals (ADC_DATA) abzutasten.

2. Vorschaltgerät nach Anspruch 1, **dadurch gekennzeichnet, dass**
   die Rückführungsschleifenschaltung (6, 7, 8) konfiguriert ist, um das Messsignal ($V_{ADC}$) zu mindestens einer vorbestimmten Zeit in der Impulsbreitenmodulationsperiode abzutasten.

3. Vorschaltgerät nach Anspruch 1 oder 2, **dadurch gekennzeichnet, dass**
   die Steuerschaltung (8) konfiguriert ist, um ein Probesteuersignal (SOC) zu erzeugen, das mit einem Impulsbreitenmodulationssteuersignal (PWM) synchronisiert ist.

4. Vorschaltgerät nach Anspruch 3, **dadurch gekennzeichnet, dass**
   das Probensteuersignal (SOC) einen Abtastimpuls zu mindestens einer Zeit von einer Startzeit oder einer Endzeit eines Impulsbreitenmodulationsimpulses des Impulsbreitenmodulationssteuersignals (PWM) einschließt.

5. Vorschaltgerät nach einem der Ansprüche 1 bis 4, **dadurch gekennzeichnet, dass**
   die Stromquellenschaltung (3) konfiguriert ist, um mit der hohen Schaltfrequenz zu arbeiten, die größer als 1 MHz ist.

6. Vorschaltgerät nach einem der Ansprüche 1 bis 5, **dadurch gekennzeichnet, dass**

   die Rückführungsschleifenschaltung (7, 8) auf einen Tiefpassfilter zum Filtern des Messsignals verzichtet, oder
   die Rückführungsschleifenschaltung (6, 7, 8) einen Tiefpassfilter (6) zum Filtern des Messsignals mit einer hohen Grenzfrequenz einschließt.

7. Vorschaltgerät nach einem der Ansprüche 1 bis 6, **dadurch gekennzeichnet, dass**
   die Steuerschaltung (8) konfiguriert ist, um das abgetastete Messsignal (ADC_DATA) mit einem Signal zu vergleichen, das einen Laststromnennwert ($I_{avg\_nom}$) darstellt, insbesondere einen extern wählbaren Laststromnennwert ($I_{avg\_nom}$).

**8.** Vorschaltgerät nach einem der Ansprüche 1 bis 7, **dadurch gekennzeichnet, dass** die Vorschaltgerät ein Strommessmittel, insbesondere einen Nebenschlusswiderstand ($R_{SHUNT}$) oder einen Messwandler umfasst, der in Reihe zum Beleuchtungsmodul angeordnet ist, wobei das Messmittel konfiguriert ist, um das Messsignal ($V_{SHUNT}$) zu erzeugen, das den Laststrom ($I_{LED}$) darstellt.

**9.** Verfahren zum Steuern einer Vorschaltgerät (1), die einen Laststrom für ein Beleuchtungsmodul, insbesondere ein LED-Modul (2), bereitstellt, wobei das Verfahren die folgenden Verfahrensschritte umfasst:

Erzeugen, durch eine Stromquellenschaltung (3), eines Stroms ($I_{OUT}$) (S1),

Bereitstellen, durch eine Impulsbreitenmodulationsschaltung (3.1), eines basierend auf dem Strom ($I_{OUT}$) erzeugten impulsbreitenmodulierten Laststroms ($I_{LED}$) über einen Ausgangskondensator ($C_{OUT}$) an das Beleuchtungsmodul (S2), und

Steuern, durch eine Steuerschaltung (8), der Impulsbreitenmodulationsschaltung (3.1) basierend auf einem Rückführungssignal (ADC_DATA), das den Laststrom ($I_{LED}$) darstellt, und

**dadurch gekennzeichnet, dass**

die Stromquellenschaltung (3) eine elektrische Schaltung mit Eigenresonanz ist, die mit einer hohen Schaltfrequenz arbeitet, wobei die Impulsbreitenmodulationsschaltung (3.1) den erzeugten Strom ($I_{OUT}$) mit einem Impulsbreitenmodulationssignal mit einer Impulsfrequenz überlagert, die kleiner ist als die hohe Schaltfrequenz, und das Verfahren

einen Schritt des Abtastens eines Messsignals ($V_{ADC}$) in Synchronisation mit einer Impulsbreitenmodulationsperiode des impulsbreitenmodulierten Signals zum Erzeugen des Rückführungssignals (ADC_DATA) (S4) umfasst.

**10.** Verfahren zum Steuern einer Vorschaltgerät (1) nach Anspruch 9, **dadurch gekennzeichnet, dass** der Schritt des Abtastens (S4) das Abtasten des Messsignals ($V_{ADC}$) zu mindestens einer vorbestimmten Zeit während der Impulsbreitenmodulation einschließt.

**11.** Verfahren zum Steuern einer Vorschaltgerät (1) nach Anspruch 9 oder 10, **gekennzeichnet durch** Umfassen eines Schritts zum Erzeugen eines Probensteuersignals (SOC), das mit einem Impulsbreitenmodulationssteuersignal (PWM) synchronisiert ist (S3).

**12.** Verfahren zum Steuern einer Vorschaltgerät nach Anspruch 11, **dadurch gekennzeichnet, dass** das Probensteuersignal (SOC) einen Abtastimpuls zu mindestens einer Zeit von einer Startzeit oder einer Endzeit eines Impulsbreitenmodulationsimpulses des Impulsbreitenmodulationssteuersignals (PWM) einschließt.

**13.** Verfahren zum Steuern einer Vorschaltgerät nach einem der Ansprüche 9 bis 12, **dadurch gekennzeichnet, dass**

das Verfahren auf das Filtern der Messspannung ($V_{SHUNT}$) in einem Tiefpassfilter der Steuerschleifenschaltung (7, 8) verzichtet, oder das

Filtern des Messsignals in einem Tiefpassfilter (6) der Steuerschleifenschaltung (6, 7, 8) mit einer hohen Grenzwertfrequenz.

**14.** Verfahren zum Steuern einer Vorschaltgerät nach einem der Ansprüche 9 bis 13, **gekennzeichnet durch** Vergleichen, durch die Steuerschaltung (8), des abgetasteten Messsignals ($V_{ADC}$) mit einem Signal, das einen Laststromnennwert ($I_{avg\_nom}$) darstellt, insbesondere einen extern wählbaren Laststromnennwert ($I_{avg\_nom}$).

**Revendications**

**1.** Dispositif de ballast permettant de fournir un courant de charge à un module d'éclairage, en particulier un module d'éclairage à DEL (2), le dispositif de ballast comprenant

un circuit de source de courant (3) configuré pour générer un courant ($I_{OUT}$),

un circuit de modulation de largeur d'impulsions (3.1) configuré pour fournir un courant de charge modulé en largeur d'impulsions ($I_{LED}$) sur la base du courant ($I_{OUT}$) par l'intermédiaire d'un condensateur de sortie ($C_{OUT}$) au module d'éclairage, et

un circuit de commande (8) pour commander le circuit de modulation de largeur d'impulsions (3.1) sur la base d'un signal de rétroaction (ADC_DATA) représentant le courant de charge ($I_{LED}$), et

**caractérisé en ce que**

le circuit de source de courant (3) est un circuit électronique de puissance à résonance automatique configuré pour fonctionner à une fréquence de commutation élevée, le circuit de modulation de largeur d'impulsions (3.1) est configuré pour superposer le courant généré ($I_{OUT}$) sur un signal de modulation de largeur d'impulsions ayant une fréquence d'impulsions inférieure à la fréquence de commutation élevée, et

**en ce qu'**un circuit de boucle de rétroaction (6, 7, 8) est configuré pour échantillonner un signal de mesure ($V_{ADC}$) représentant le courant de charge ($I_{LED}$) en synchronisation avec une période de modulation de largeur d'impulsions du signal de modulation de largeur d'impulsions pour générer le signal de rétroaction (ADC_DATA).

2. Dispositif de ballast selon la revendication 1, **caractérisé en ce que**
le circuit de boucle de rétroaction (6, 7, 8) est configuré pour échantillonner le signal de mesure ($V_{ADC}$) à au moins un moment prédéterminé de la période de modulation de largeur d'impulsions.

3. Dispositif de ballast selon la revendication 1 ou 2, **caractérisé en ce que**
le circuit de commande (8) est configuré pour générer un signal de commande d'échantillon (SOC) qui est synchronisé avec un signal de commande de modulation de largeur d'impulsions (PWM).

4. Dispositif de ballast selon la revendication 3, **caractérisé en ce que** le
signal de commande d'échantillon (SOC) comporte une impulsion d'échantillonnage à au moins l'un parmi un moment de début ou un moment de fin d'une impulsion de modulation de largeur d'impulsions du signal de commande de modulation de largeur d'impulsions (PWM).

5. Dispositif de ballast selon l'une quelconque des revendications 1 à 4, **caractérisé en ce que**
le circuit de source de courant (3) est configuré pour fonctionner à la fréquence de commutation élevée, qui est supérieure à 1 MHz.

6. Dispositif de ballast selon l'une quelconque des revendications 1 à 5, **caractérisé en ce que**

le circuit de boucle de rétroaction (7, 8) se passe d'un filtre passe-bas pour filtrer le signal de mesure, ou
le circuit de boucle de rétroaction (6, 7, 8) comporte un filtre passe-bas (6) pour filtrer le signal de mesure avec une fréquence de coupure élevée.

7. Dispositif de ballast selon l'une quelconque des revendications 1 à 6, **caractérisé en ce que**
le circuit de commande (8) est configuré pour comparer le signal de mesure échantillonné (ADC_DATA) avec un signal représentant une valeur nominale de courant de charge ($I_{avg\_nom}$), en particulier une valeur nominale de courant de charge ($I_{avg\_nom}$) sélectionnable externe.

8. Dispositif de ballast selon l'une quelconque des revendications 1 à 7, **caractérisé en ce que**
le dispositif de ballast comprend un moyen de mesure de courant, en particulier une résistance de dérivation ($R_{SHUNT}$) ou un transformateur de mesure, agencé en série au module d'éclairage, dans lequel le moyen de mesure est configuré pour générer le signal de mesure ($V_{SHUNT}$) représentant le courant de charge ($I_{LED}$).

9. Procédé de commande d'un dispositif de ballast (1) fournissant un courant de charge à un module d'éclairage, en particulier à un module à DEL (2), le procédé comprenant les étapes de procédé suivantes consistant à :

générer, par un circuit de source de courant (3), un courant ($I_{OUT}$) (S1),
fournir, par un circuit de modulation de largeur d'impulsions (3.1), un courant de charge modulé en largeur d'impulsions ($I_{LED}$) généré sur la base du courant ($I_{OUT}$) par l'intermédiaire d'un condensateur de sortie ($C_{OUT}$) au module d'éclairage (S2), et
commander, par un circuit de commande (8), le circuit de modulation de largeur d'impulsions (3.1) sur la base d'un signal de rétroaction (ADC_DATA) représentant le courant de charge ($I_{LED}$), et
**caractérisé en ce que**
le circuit de source de courant (3) est un circuit électronique de puissance à résonance automatique fonctionnant à une fréquence de commutation élevée, dans lequel le circuit de modulation de largeur d'impulsions (3.1) superpose le courant généré ($I_{OUT}$) sur un signal de modulation de largeur d'impulsions avec une fréquence d'impulsions inférieure à la fréquence de commutation élevée, et le procédé
comprenant une étape consistant à échantillonner un signal de mesure ($V_{ADC}$) en synchronisation avec une période de modulation de largeur d'impulsions du signal de modulation de largeur d'impulsions pour générer le signal de
rétroaction (ADC_DATA) (S4).

10. Procédé de commande d'un dispositif de ballast (1) selon la revendication 9, **caractérisé en ce que**
l'étape consistant à échantillonner (S4) comporte l'échantillonnage du signal de mesure ($V_{ADC}$) à au moins un moment prédéterminé de la période de modulation de largeur d'impulsions.

11. Procédé de commande d'un dispositif de ballast (1) selon la revendication 9 ou 10, **caractérisé par** le fait de comprendre
une étape consistant à générer un signal de commande d'échantillon (SOC) qui est synchronisé avec un signal de commande de modulation de largeur d'impulsions (PWM) (S3).

12. Procédé de commande d'un dispositif de ballast selon la revendication 11, **caractérisé en ce que**
le signal de commande d'échantillon (SOC) comporte une impulsion d'échantillonnage à au moins l'un parmi un moment de début ou un moment de fin d'une impulsion de modulation de largeur d'impulsions du signal de commande de modulation de largeur d'impulsions (PWM).

13. Procédé de commande d'un dispositif de ballast selon l'une quelconque des revendications 9 à 12, **caractérisé en ce que**

le procédé se passe du filtrage de la tension de mesure ($V_{SHUNT}$) dans un filtre passe-bas du circuit de boucle de commande (7, 8), ou
le filtrage du signal de mesure dans un filtre passe-bas (6) du circuit de boucle de commande (6, 7, 8) avec une fréquence de coupure haute.

14. Procédé de commande d'un dispositif de ballast selon l'une quelconque des revendications 9 à 13, **caractérisé par**
la comparaison, par le circuit de commande (8), du signal de mesure échantillonné ($V_{ADC}$) avec un signal représentant une valeur nominale de courant de charge ($I_{avg\_nom}$), en particulier une valeur nominale de courant de charge ($I_{avg\_nom}$) sélectionnable externe.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016057823 A1
- US 2015137785 A1
- US 2009206902 A1